# EUROPÄISCHE PATENTSCHRIFT

(11) **EP 0 511 471 B1**
(45) Veröffentlichungstag und Bekanntmachung des Hinweises auf die Patenterteilung: **25.01.1995**
(21) Anmeldenummer: 92103548.1
(22) Anmeldetag: 02.03.1992
(51) Int. Cl.: A01B 13/08, A01B 63/26

(54) **Vorrichtung zur einstellbaren Halterung eines Bauelementes**
Device for adjustably mounting an agricultural element
Dispositif pour le montage ajustable d'un élément agricole

(30) Priorität: 30.04.1991 DE 9105275 U
(43) Veröffentlichungstag der Anmeldung: 04.11.1992
(73) Patentinhaber: Rabewerk GmbH + Co., 49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- EP-A- 0 048 907
- DE-U- 8 213 692
- GB-A- 1 386 454

## Beschreibung

Die Erfindung bezieht sich auf eine Vorrichtung zur einstellbaren Halterung eines Bauelementes, insbesondere eines Bodenbearbeitungswerkzeuges, an einer Bodenbearbeitungsmaschine oder dergleichen, bestehend aus einem an dem Bauelement befestigten, sich im wesentlichen vertikal erstreckenden Stiel, der mit einer Vielzahl von im wesentlichen gleichmäßig beabstandeten Ausnehmungen versehen ist, einer Tasche, in welcher der Stiel verschiebbar geführt ist, und zumindest einem Verriegelungselement, mit dessen Hilfe der Stiel in einer vorbestimmten Lage relativ zu der Tasche fixierbar ist.

Ein in seiner Lage veränderbar einzustellendes Bauelement einer Bodenbearbeitungsmaschine ist beispielsweise ein Vorlockerer, welcher beispielsweise auf der Vorderseite einer Kreiselegge oder eines Zinkenrotors angebracht ist, um geringfügig unterhalb der Arbeitstiefe der zapfwellenangetriebenen Bodenbearbeitungsmaschine das Erdreich zu durchschneiden. Aus konstruktiven Gründen sind derartige Vorlockerer relativ groß und schwer, beispielsweise deshalb, weil sie nur einreihig ausgeführt sein können, so daß, bezogen auf die gesamte Arbeitsbreite der Bodenbearbeitungsmaschine, nur eine geringe Anzahl an Vorlockerern vorgesehen sein können, welche jeweils eine erhebliche Schnittbreite aufweisen. Zusätzlich zu dem Gewicht der Vorlockerer müssen ganz erhebliche Kräfte über die Lagerung aufgenommen werden. Weiterhin ist es erforderlich, die Arbeitstiefe der Vorlockerer oder Vorwerkzeuge einzustellen, um diese dem nachfolgenden Bodenbearbeitungsgerät anzupassen.

Es ergeben sich somit hinsichtlich der einstellbaren Halterungsvorrichtung zwei wesentliche Gesichtspunkte: die Halterungsvorrichtung muß zum einen ausreichend dimensioniert sein, um die hohen auftretenden Kräfte aufnehmen und weiterleiten zu können, zum anderen muß die Halterung leicht verstellbar sein, um die Arbeitstiefe der Bauelemente, beispielsweise der Vorlockerer, in einfacher Weise einstellen zu können. Der Stand der Technik, wie er beispielsweise in den Druckschriften EP 0 048 907 A1, DE 82 13 692 U1 und GB 1 386 454 (welche die Merkmale des Oberbegriffs des Anspruchs 1 zeigt) beschrieben ist, zeigt unter anderem Ausführungsformen, bei welchen die Stiele der jeweiligen Bauelemente verschiebbar in Taschen geführt sind. Eine Fixierung erfolgt dabei üblicherweise mittels eines Steckbolzens, welcher die Tasche und den Stiel durchdringt. Die Tasche gewährleistet eine kippsichere Lagerung, während der Steckbolzen eine Verschiebung des Stieles relativ zu der Tasche verhindert. Um die Arbeitsstellung des Stieles relativ zu der Tasche einstellen zu können, ist es aus der Druckschrift DE 82 13 692 U1 bekannt, handbetätigte Spindeltriebe einzusetzen. Da nicht jeder Tasche bzw. jedem Stiel ein eigener Spindeltrieb vorgesehen sein kann, müssen die Spindeln umgesetzt werden. Dies ist relativ aufwendig und kompliziert, so daß sich der Einstellvorgang für den Fahrer des der Bodenbearbeitungsmaschine zugeordneten Schleppers sehr unbequem gestaltet. Es sind auch hydraulische Verstellmöglichkeiten bekannt geworden, diese weisen jedoch ein sehr hohes Gewicht auf und bedingen einen hohen apparativen Aufwand. Ein weiterer Nachteil dieser vorbekannten Ausführungsformen besteht darin, daß die Verstellung des Stieles relativ zu der Tasche in exakter Weise so erfolgen muß, daß die Löcher oder Ausnehmungen der Tasche und des Stieles, durch welche nachfolgend der Steckbolzen durchgeführt werden soll, exakt fluchten. Auch dies ist aus verständlichen Gründen sehr umständlich und schwer zu realisieren.

Ein weiterer, wesentlicher Nachteil der bekannten Vorrichtungen liegt weiterhin darin, daß die einzelnen Taschen oder Stiele nacheinander für die neue Arbeitstiefe angepaßt werden müssen, so daß die Bedienungsperson außer hohen körperlichen Anstrengungen einen erheblichen Zeitaufwand benötigt, um den Einstellvorgang durchzuführen.

Der Erfindung liegt die Aufgabe zugrunde, eine Vorrichtung der eingangs genannten Art zu schaffen, welche bei einfachem Aufbau und einfacher, kostengünstiger Herstellbarkeit eine sichere Lagerung des jeweiligen Stieles in der Tasche gewährleistet und eine schnelle, einfache und kräftesparende Einstellung der Lage des Stieles zu der Tasche ermöglicht.

Diese Aufgabe wird erfindungsgemäß mit den Merkmalen des Anspruchs 1 gelöst.

Die erfindungsgemäße Vorrichtung zeichnet sich durch eine Reihe erheblicher Vorteile aus. Erfindungsgemäß durchgreift das Verriegelungselement nicht die Tasche und den Stiel, sondern lediglich den Stiel. Die Bedienungsperson muß somit nicht darauf achten, ob Bohrungen oder Ausnehmungen der Tasche und des Stieles miteinander fluchten, vielmehr ist es lediglich erforderlich, das Verriegelungselement durch die jeweilige Ausnehmung des Stieles durchzuführen. Hierdurch wird der Einstellvorgang bereits erheblich vereinfacht. Eine weitere Vereinfachung des Verriegelungs- und Einstellvorganges ergibt sich dadurch, daß die Verriegelungselemente gegen die jeweilige Außenberandung der Tasche anliegen und diese auf diese Weise relativ zu dem Stiel fixieren. Daraus folgt, daß nach Lösen eines der Verriegelungselemente der Stiel relativ zu der Tasche in einer Richtung frei verschiebbar ist. Es ist somit möglich, das jeweilige Verriegelungselement zu entfernen und durch Anheben oder Absenken des zugehörigen Bodenbearbeitungsgerätes die Verschiebung des Stieles in der Tasche zu realisieren. Zur Begrenzung der Verschiebung muß lediglich das Verriegelungselement in die gewünschte nächste oder eine weitere Ausnehmung eingesteckt werden. Nachdem die Tasche relativ zu dem Stiel verschoben wurde, kann in einfachster Weise das andere Verriegelungselement gelöst und in seine neue Position gebracht werden. Auf dieses Weise ist es ohne weitere Kraftanstrengung möglich, unter Zuhilfenahme der Kinematik der zugeordneten Bodenbearbeitungsmaschine oder des Schleppers den Verstellvorgang vorzunehmen. Auf separate Verstelleinrichtungen, beispielsweise Spindeltriebe o.ä., kann somit gänz-lich verzichtet werden. Zusätzlich zu der wesentlichen Vereinfachung des Verstellvorganges ergibt sich eine einfachere, gewichtssparende und kostengünstigere Ausgestaltung der gesamten Anordnung. Ein weiterer, wesentlicher Vorteil liegt darin, daß mehrere nebeneinander vorgesehene Bauelemente, beispielsweise Vorlockerer, Räder o.ä. gleichzeitig, d.h. in einem Arbeitsgang in ihrer Arbeitshöhe eingestellt werden können. Hierzu muß lediglich die Bedienungsperson zunächst sämtliche der jeweiligen Verriegelungselemente entfernen, daraufhin die Absenkung bzw. Anhebung der Taschen oder der Stiele vornehmen und nachfolgend die anderen Verriegelungselemente in ihre Endstellung versetzen. Eine derartige Einstellung der Arbeitstiefe oder Arbeitshöhe kann beispielsweise dadurch erfolgen, daß die Vorlockerer auf den Boden aufgesetzt werden. Die erfindungsgemäße Vorrichtung ist jedoch auch in vorteilhafter Weise anwendbar für die Lageeinstellung von Stützrädern oder ähnlichem.

Erfindungsgemäß weisen die Ausnehmungen des Stieles bzw. die freien Abstände der eingesetzten Verriegelungselemente einen Abstand zueinander auf, welcher geringfügig größer ist, als die jeweilige Länge bzw. Breite der Tasche, so daß ein klemmfreies Lösen der Verriegelungselemente gewährleistet ist, ohne daß dies zu ungewollten Relativbewegungen zwischen der Taschen und dem Stiel während des Arbeitseinsatzes führen könnte.

Aus oben stehender Beschreibung ergibt sich, daß die erfindungsgemäße Vorrichtung bei einer Vielzahl von Bauelementen verwendbar ist, beispielsweise auch bei Tieflockerern, schweren Rädern, Bodenwalzen o.ä..

Da die Verschiebung des jeweiligen Stieles relativ zu der Tasche durch die Bewegung der zugeordneten Bodenbearbeitungsmaschine bzw. der Schlepperhydraulik erfolgt, sind Verklemmungen des Stieles in der Tasche gänzlich auszuschliessen, da eine Belastung der Stiele bei der Verschiebung relativ zu der Tasche lediglich in Längsrichtung des jeweiligen Stieles erfolgt.

In einer besonders bevorzugten Weiterbildung der Erfindung ist vorgesehen, daß das Verriegelungselement in Form eines Steckbolzens ausgebildet ist. Dieser kann in seinem freien Ende eine Ausnehmung aufweisen, durch welche ein Sicherungselement, beispielsweise ein Klappstecker oder ein Vorstecker durchführbar ist, um ein unbeabsichtigtes Lösen des Steckbolzens zu verhindern.

Erfindungsgemäß kann es wünschenswert sein, wenn die Lage der Tasche relativ zu dem Stiel nicht nur in ganzen Abständen der Ausnehmungen einstellbar ist, sondern auch in Zwischenwerten. Dies läßt sich erfindungsgemäß besonders einfach dadurch realisieren, daß das Verriegelungselement mit einer Anschlagplatte versehen und in um hundertachzig Grad versetzten Positionen auf den Stiel aufsetzbar ist, wobei die Anschlagplatte eine Verdrehsicherung aufweist und zu beiden Seiten des Verriegelungselementes eine unterschiedliche Längenerstreckung aufweist. Die Längenerstreckung ist dabei so gewählt, daß sie dem halben Abstand der Ausnehmungen entspricht. Durch eine entsprechende Ausrichtung der beiden Verriegelungselemente an den beiden Enden der Tasche kann diese somit um einen haben Lochabstand versetzt werden. Dies führt zu dem Vorteil, daß entweder eine feinere Unterteilung der Einstellung des Bauelementes möglich ist, oder daß der Stiel mit einer geringeren Anzahl an Ausnehmungen versehen sein kann.

Die Erfindung ermöglicht es auch, an dem Stiel unterschiedliche Bereiche mit einer unterschiedlich feinstufigen Einstellbarkeit der Tasche vorzusehen, es ist hierbei lediglich erforderlich, entsprechende Abstände der Ausnehmungen vorzusehen.

Die oben erwähnte Verdrehsicherung der Anschlagplatte kann dadurch realisiert werden, daß ein zweiter, an der Anschlagplatte befestigter Bolzen vorgesehen ist, welcher jeweils in eine benachbarte Ausnehmung neben dem Verriegelungselement einbringbar ist. Es ist jedoch auch möglich, die Anschlagplatte in Form einer u-förmigen Klammer auszubilden, welche den Stiel umgreift.

Erfindungsgemäß ist es weiterhin möglich, daß die Tasche an ihrer den Verriegelungselementen benachbarten Berandung mit Ausschnitten zur formschlüssigen Aufnahme eines Teiles des Querschnittes des jeweiligen Verriegelungselementes versehen ist, um eine günstige Kraftübertragung zu gewährleisten und eine bessere Fixierung der Tasche relativ zu dem Stiel zu erreichen.

Im folgenden wird die Erfindung an Hand von Ausführungsbeispielen in Verbindung mit der Zeichnung beschrieben. Dabei zeigt:
- Fig. 1: eine schematische Seitenansicht eines ersten Ausführungsbeispieles der Erfindung in Zusammenhang mit einem Vorbaurahmen für einen Vorlockerer,
- Fig. 2: eine Vorderansicht der in Fig. 1 gezeigten Anordnung,
- Fig. 3 und Fig. 4: jeweils Seitenansichten eines weiteren Ausführungsbeispieles der erfindungsgemäßen Vorrichtung,
- Fig. 5 und Fig.6: jeweils Seitenansichten eines dritten Ausführungsbeispieles der erfindungsgemäßen Vorrichtung,
- Fig. 7: eine Seitenansicht eines weiteren Ausführungsbeispieles einer erfindungsgemäßen Verdrehsicherung und
- Fig. 8: eine Seitenansicht, ähnlich Fig. 7, eines weiteren Ausführungsbeispieles der Verdrehsicherung.

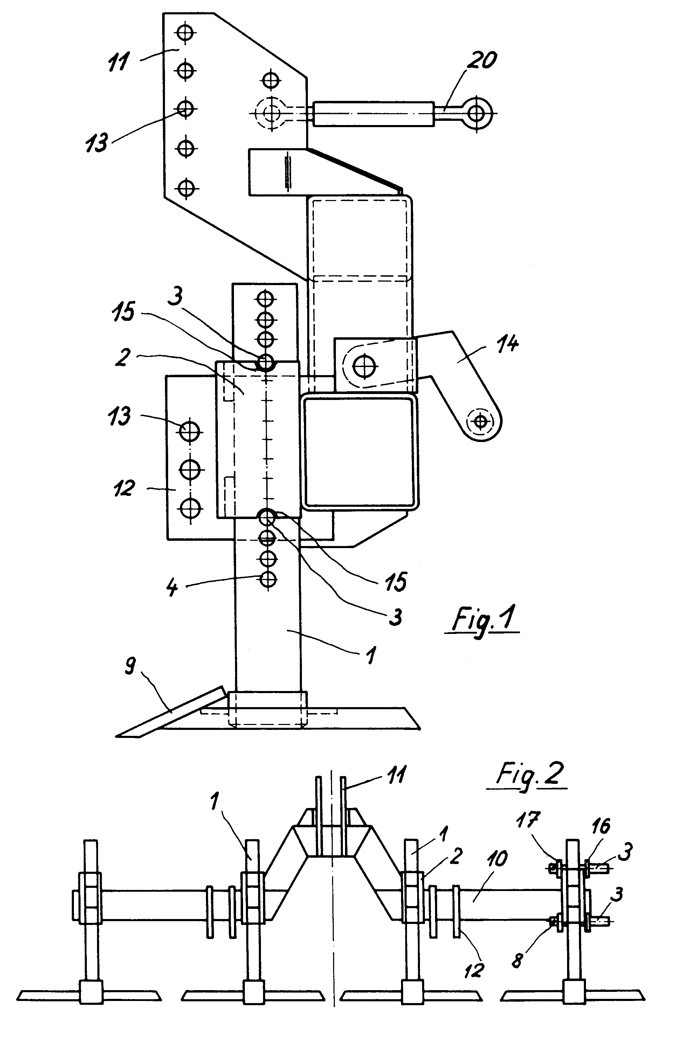

In Fig. 1 ist in schematischer Weise in der Seitenansicht ein Vorbaurahmen für einen Vorlockerer 9 dargestellt. Der Vorlockerer 9 ist mit einem Stiel 1 verbunden, welcher vertikal verschiebbar in einer Tasche 2 geführt ist. Die Tasche 2 ist in Form zweier zueinander paralleler Platten ausgebildet, so wie dies aus Fig. 2 ersichtlich ist. Die Tasche 2 ist an einem Vorbaurahmen 10 befestigt, welcher sich im wesentlichen über die gesamte Arbeitsbreite des Gerätes erstreckt und in seiner Mitte eine Überbrückung aufweist, um die Zapfwelle eines Bodenbearbeitungsgerätes durchführen zu können. Die Ausgestaltung des Vorbaurahmens und der Taschen 2 entspricht im wesentlichen dem Stand der Technik. An dem Vorbaurahmen können obere Platten 11 und untere Platten 12 angebracht sein, welche Ausnehmungen 13 aufweisen, die zur Verbindung mit einem Oberlenker bzw. Unterlenkern eines Schleppers dienen. Weiterhin ist es möglich, an den Platten einen Oberlenker 20 und einen Unterlenker 14 für ein nachfolgendes Bodenbearbeitungsgerät anzubringen.

Erfindungsgemäß ist vorgesehen, daß an den oberen bzw. unteren Endbereichen der Tasche 2 im Querschnitt halbkreisförmige Ausnehmungen 15 vorgesehen sind, welche in ihrem Abstand zu einer Reihe von Ausnehmungen 4 des Stieles 1 passen. Durch die Ausnehmungen 4 des Stieles 1 sind, wie in Fig. 2 dargestellt, Verriegelungselemente 3 durchführbar, welche mit einem Teil Ihres Querschnittes in den Ausnehmungen 15 der Tasche liegen und sich im übrigen gegen den oberen bzw. unteren Endbereich der Tasche 2 abstützen. Das Verriegelungselement 3 ist in Form eines Steckbolzens ausgebildet, welcher eine feste Scheibe 16 und eine aufsteckbare Scheibe 17 aufweist. Das freie Ende des Verriegelungselementes 3 ist mit einer Ausnehmung versehen, durch welche ein im einzelnen nicht dargestelltes Sicherungselement 8, beispielsweise in Form eines Klappsteckers oder eines Splintes durchführbar ist.

Nachfolgend wird die Betätigung der erfindungsgemäßen Vorrichtung an Hand des Ausführungsbeispieles der Fig. 1 und 2 beschrieben. Bei dem in Fig. 2 gezeigten Zustand sind das obere und das untere Verriegelungselement 3 jeweils in den Stiel 1 eingesteckt, so daß die Tasche 2 relativ zu dem Stiel 1 nicht verschoben werden kann. Um den Stiel 1 nach unten zu verschieben, ist es lediglich erforderlich, das obere Verriegelungselement 3 herauszulösen. Durch Anheben des Vorbaurahmens 10 mit Hilfe der zugeordneten Bodenbearbeitungsmaschine bzw. des Schleppers gleitet der Stiel 1 nach unten. Die Bedienungsperson muß zur Begrenzung dieser Verschiebung das Verriegelungselement 3 in die gewünschte nächste oder übernächste Ausnehmung 4 des Stieles 1 einsetzen. Die Tasche 2 liegt somit gegen das in die neue Stellung gebrachte obere Verriegelungselement 3 an, es ist nunmehr möglich, das untere Verriegelungselement 3 aus seiner bisherigen Stellung zu lösen und in eine weiter oben liegende Ausnehmung 4 einzusetzen, so daß sich wiederum der in Fig. 2 gezeigte Zustand einstellt, bei welchem die Endbereiche der Tasche 2 direkt gegen die Verriegelungselemente 3 anliegen. Bei einer Verstellung des Vorlockerers 9 in die andere Richtung erfolgt der Arbeitsablauf in analoger Weise, wobei es hierbei erforderlich ist, den Vorbaurahmen 10 abzusenken, nachdem das untere Verriegelungselement 3 gelöst und in eine tiefer liegende Ausnehmung 4 eingebracht wurde. Aus dieser Beschreibung ergibt sich, daß es möglich ist, sämtliche Vorlockerer 9 mit einem Arbeitsgang in ihrer Höhe gleichmäßig einzustellen, ohne daß die Bedienungsperson hierfür besondere körperliche Kräfte aufwenden müßte. Der zeitliche Aufwand ist ebenfalls ausgesprochen begrenzt, da lediglich ein Umstecken der Verriegelungselemente 3 erforderlich ist.

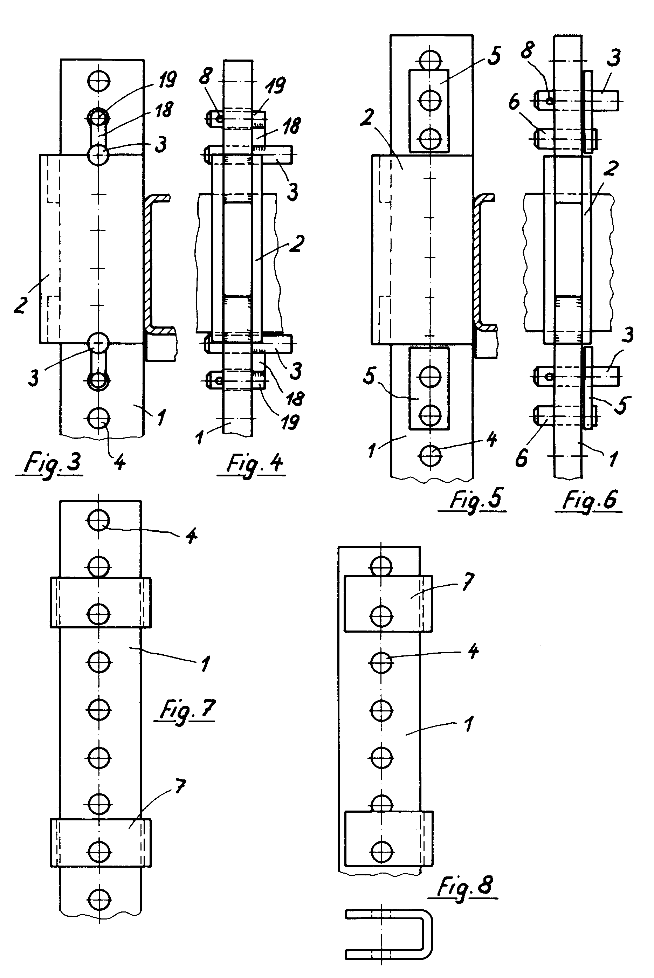

Die Fig. 3 und 4 zeigen ein weiteres Ausführungsbeispiel, bei welchem das jeweilige Verriegelungselement 3 über einen Steg 18 mit einem zweiten Bolzen 19 verbunden ist. Bei diesem Ausführungsbeispiel ist der Bolzen 19 an seinem Ende mit einer Bohrung versehen, durch welche ein Sicherungselement 8 durchsteckbar ist. Diese Ausführungsform erweist sich deshalb als günstig, weil das Sicherungselement 8 in den zweiten Bolzen 19 eingesteckt werden kann. Dies wäre bei dem Verriegelungselement 3 möglicherweise schwieriger, da dieses in der halbkreisförmigen Ausnehmung 15 der Tasche 2 liegt.

Die Fig. 5 und 6 zeigen ein weiteres Ausführungsbeispiel, bei welchem das Verriegelungselement 3 mit einer Anschlagplatte 5 verbunden ist. Als Verdrehsicherung ist zusätzlich ein zweiter Bolzen 6 vorgesehen. Die Anschlagplatte 5 erstreckt sich zu unterschiedlichen Seiten des Verriegelungselementes 3 über eine unterschiedliche Entfernung, so daß durch Umsetzen der Anschlagplatte 5 um hundertachzig Grad wahlweise eine ganzteilige oder halbteilige Verstellung der Tasche 2 relativ zu dem Lochabstand der Ausnehmungen 4 möglich ist.

In den Fig. 7 und 8 wird die Verdrehsicherung der in dem Ausführungsbeispiel gemäß Fig. 5 und 6 vorgesehenen Anschlagplatte 5 nicht mittels eines zweiten Bolzens, sondern durch eine u-förmige Ausgestaltung der Anschlagplatte 5 in Form einer Klammer 7 erreicht. Im übrigen entsprechen die Ausführungsbeispiele der Fig. 7 und 8 in ihrer Anwendung dem Ausführungsbeispiel gemäß den Fig. 5 und 6.

## Patentansprüche

1. Vorrichtung zur einstellbaren Halterung eines Bauelementes, insbesondere eines Bodenbearbeitungswerkzeuges, an einer Bodenbearbeitungsmaschine oder dergleichen, bestehend aus
(a) einem an dem Bauelement (9) befestigten, sich im wesentlichen vertikal erstreckenden Stiel (1), der mit einer Vielzahl von im wesentlichen gleichmäßig beabstandeten Ausnehmungen (4) versehen ist,
(b) einer Tasche (2), in welcher der Stiel (1) verschiebbar geführt ist, und
(c) zumindest einem Verriegelungselement (3), mit dessen Hilfe der Stiel (1) in einer vorbestimmten Lage relativ zu der Tasche (2) fixierbar ist,
dadurch gekennzeichnet, daß
(d) die Tasche (2) sich nur über einen Teil der mit den Ausnehmungen (4) versehenen Länge des Stieles (1) erstreckt,
(e) je ein Verriegelungselement (3) unmittelbar oberhalb und unterhalb der Tasche (2), in den Stiel (1) einsteckbar, vorgesehen ist.

2. Vorrichtung nach Anspruch 1, dadurch gekennzeichnet, daß das Verriegelungselement (3) in Form eines Steckbolzens ausgebildet ist.

3. Vorrichtung nach Anspruch 1 oder 2, dadurch gekennzeichnet, daß das Verriegelungselement (3) mit einer Anschlagplatte (5) versehen und in um hundertachtzig Grad versetzten Positionen auf den Stiel (1) aufsetzbar ist, wobei die Anschlagplatte (5) eine Verdrehsicherung aufweist und zu beiden Seiten des Verriegelungselementes (3) eine unterschiedliche Längenerstreckung zum wahlweisen Fixieren der Lage der Tasche (2) in ganzen oder halben Abständen der Ausnehmungen (4) aufweist.

4. Vorrichtung nach Anspruch 3, dadurch gekennzeichnet, daß die Verdrehsicherung in Form eines zweiten, an der Anschlagplatte (5) befestigten Bolzens (6) ausgebildet ist.

5. Vorrichtung nach Anspruch 3, dadurch gekennzeichnet, daß die Verdrehsicherung in Form einer von dem Verriegelungselement (3) durchdringbaren, U-förmigen Klammer ausgebildet ist.

6. Vorrichtung nach einem der Ansprüche 2 bis 5, dadurch gekennzeichnet, daß das Verriegelungselement (3) mittels eines Sicherungselementes (8) gegen unbeabsichtigtes Lösen sicherbar ist.

7. Vorrichtung nach einem der Ansprüche 1 bis 6, dadurch gekennzeichnet, daß die Tasche (2) an ihrer den Verriegelungselementen (3) benachbarten Berandung mit Ausschnitten zur formschlüssigen Aufnahme eines Teiles des Querschnittes des jeweiligen Verriegelungselementes (3) versehen ist.

8. Vorrichtung nach einem der Ansprüche 1 bis 7, dadurch gekennzeichnet, daß das Bauelement (9) ein Vorlockerer ist.

## Claims

1. A device for the adjustable mounting of an element, in particular a soil tilling implement, on a soil tilling machine or the like, consisting of
(a) a shaft (1) which extends substantially vertically, is secured to the element (9) and is provided with a plurality of openings (4) which are spaced apart in a substantially uniform manner,
(b) a sleeve (2) in which the shaft (1) is displaceably guided, and
(c) at least one locking element (3) with the aid of which the shaft (1) can be fixed in a predetermined position relative to the sleeve (2),
characterised in that
(d) the sleeve (2) only extends over part of the shaft length provided with the openings (4),
(e) respective locking elements (3), which are insertable into the shaft (1), are provided directly above and below the sleeve (2).

2. A device in accordance with Claim 1, characterised in that the locking element (3) is in the form of a linchpin.

3. A device in accordance with Claim 1 or 2, characterised in that the locking element (3) is provided with a stop plate (5) and can be placed onto the shaft (1) in positions shifted through one hundred and eighty degrees, the stop plate (5) having an anti-rotation device and differing in longitudinal extension to either side of the locking element (3) to give the option of fixing the position of the sleeve (2) at whole or half opening intervals.

4. A device in accordance with Claim 3, characterised in that the anti-rotation device is in the form of a second pin (6) which is secured to the stop plate (5).

5. A device in accordance with Claim 3, characterised in that the anti-rotation device is in the form of a U-shaped clip penetratable by the locking element (3).

6. A device in accordance with any one of Claims 2 to 5, characterised in that the locking element (3) can, by means of a securing element (8), be secured against unintentional loosening.

7. A device in accordance with any one of Claims 1 to 6, characterised in that the sleeve (2) is, at its boundary adjacent the locking elements (3), provided with cutouts to receive, in a positive-locking manner, part of the cross-section of the locking element (3) in question.

8. A device in accordance with any one of Claims 1 to 7, characterised in that the element (9) is a pre-loosening device.

## Revendications

1. Dispositif pour fixer, de façon réglable, un élément de construction, en particulier un outil de préparation du sol, sur une machine agricole ou similaire, constitué de:
(a) un montant (1), essentiellement disposé verticalement, fixé à l'élément de construction (9) et présentant une multiplicité d'évidements (4) essentiellement disposés à la même distance les uns des autres,
(b) un gousset (2), dans lequel le montant (1) est guidé avec possibilité de coulisser, et
(c) au moins un organe de verrouillage (3), à l'aide duquel le montant (1) peut être fixé dans une position prédéfinie par rapport au gousset (2),
caractérisé en ce que
(d) le gousset (2) s'étend seulement sur une partie de la longueur du montant (1), qui présente les évidements (4),
(e) il est chaque fois prévu un organe de verrouillage (3) pouvant être enfoncé dans le montant directement au-dessus et au-dessous du gousset (2).

2. Dispositif suivant la revendication 1, caractérisé en ce que l'organe de verrouillage (3) est réalisé sous la forme d'un axe enfichable.

3. Dispositif suivant la revendication 1 ou la revendication 2, caractérisé en ce que l'organe de verrouillage (3) est équipé d'une plaque de butée (5) et peut être placé sur le montant (1) dans des positions décalées de 180°, étant entendu que la plaque de butée (5) présente un dispositif de sécurité anti-rotation et présente, des deux côtés de l'organe de verrouillage (3), un prolongement de longueur différente pour fixer, à volonté, la position du gousset (2) suivant des écartements entiers ou suivant des demi-écartements des évidements (4).

4. Dispositif suivant la revendication 3, caractérisé en ce que le dispositif de sécurité anti-rotation est réalisé sous la forme d'un deuxième axe (6) fixé à la plaque de butée (5).

5. Dispositif suivant la revendication 3, caractérisé en ce que le dispositif de sécurité anti-rotation est réalisé sous la forme d'une griffe en forme de U, pouvant être traversée par l'organe de verrouillage (3).

6. Dispositif suivant l'une quelconque des revendications 1 à 5, caractérisé en ce que l'organe de verrouillage (3) est assuré, au moyen d'un dispositif de sécurité (8), contre un départ intempestif.

7. Dispositif suivant l'une quelconque des revendications 1 à 6, caractérisé en ce que le gousset (2) présente, sur sa bordure voisine des organes de verrouillage (3), des découpes destinées à recevoir, avec conjugaison de forme, une partie de la section de l'organe de verrouillage (3) correspondant.

8. Dispositif suivant l'une quelconque des revendications 1 à 7, caractérisé en ce que l'élément de construction (9) est un dispositif d'ameublissement préalable du sol.
